# EUROPEAN PATENT SPECIFICATION

(11) **EP 2 887 331 B1**
(45) Date of publication and mention of the grant of the patent: **15.05.2019**
(21) Application number: 14198188.6
(22) Date of filing: 16.12.2014
(51) Int. Cl.: G08C 17/02

(54) **CONTENT REPRODUCTION CONTROL DEVICE, CONTENT REPRODUCING SYSTEM, CONTENT REPRODUCING METHOD, AND CONTENT REPRODUCING PROGRAM**
INHALTSWIEDERGABESTEUERUNGSVORRICHTUNG, INHALTSWIEDERGABESYSTEM, INHALTSWIEDERGABEVERFAHREN UND INHALTSWIEDERGABEPROGRAMM
DISPOSITIF, SYSTÈME, PROCÉDÉ ET PROGRAMME DE REPRODUCTION DE CONTENU

(30) Priority: 19.12.2013 JP 2013262315
(43) Date of publication of application: 24.06.2015
(73) Proprietor: CASIO COMPUTER CO., LTD., Shibuya-ku, Tokyo 151-8543 (JP)
(72) Inventor: Shinozaki, Yoshihiko, Hamura-shi, Tokyo 205-8555 (JP)
(74) Representative: Grünecker Patent- und Rechtsanwälte PartG mbB

(56) References cited:
- JP-A- 2001 282 424
- US-A1- 2009 190 042
- "Samsung App Profile: Remote App", INTERNET CITATION, 30 July 2011 (2011-07-30), XP002779556, Retrieved from the Internet: URL:http://www.samsung.com/global/article/ articleDetailView.do?atcl_id=20 [retrieved on 2018-03-26]
- "High-Definition Multimedia Interface Specification Version 1.3a", INTERNET CITATION, 10 November 2006 (2006-11-10), XP002779557, Retrieved from the Internet: URL:http://www.microprocessor.org/HDMISpec ification13a.pdf [retrieved on 2018-03-26]

## Description

### Technical Field

The present invention relates to a content reproduction control device configured to control a content reproducing device, content reproducing system comprising the content reproducing device and content reproduction control device, content reproducing method, and content reproducing program.

### Background Art

In recent years, a number of applications for controlling a content reproducing device such as a projector by using a smartphone, tablet device or the like (hereinafter, generally referred to as a smart device) have been developed.

When the content reproducing device is controlled by using the application, the smart device functions as a content output device and content reproduction control device.

That is, in this case, the smart device serving as a content reproduction control device is operated by the user, whereby the contents in the smart device are output to the content reproducing device, and the output contents are reproduced by the content reproducing device.

Further, in recent years, an application for controlling a personal computer (PC) by using a smart device is also developed.

By utilizing the PC control function, it is also possible to control a content reproducing device connected to a PC through the PC .

For example, US 2009/190042 A1 relates to a TV, which reproduces video images based on information obtained from a PC via an HDMI receiver or at least one other wired route for signal reception, such as TV tuner or DVD player. A remote controller is used for user interaction with these apparatuses, including switching the input content source between the TV and PC, as well as operating the content reproducing software executed on the PC.

For example, a presentation system proposed in Jpn. Pat. Appln. KOKAI Publication No. 2001-282424 makes it possible to remotely operate a PC by using a remote control unit capable of transmitting a signal corresponding to a keyboard of the PC.

In a technique of Jpn. Pat. Appln. KOKAI Publication No. 2001-282424, when a signal from a remote control unit is received by a PC, contents in the PC are output to a projector serving as a content reproducing device, and the output contents are reproduced by the projector.

In this case, the PC functions as a content reproduction control device and a content output device.

The user operates the PC serving as the content output device through the remote control unit.

### Summary of the invention

When the content reproduction control device such as a smart device includes an application for directly controlling a content reproducing device such as a projector and an application for controlling a content output device such as a PC, separately, it is necessary for the user to carry out an operation of switching between these applications in order to reproduce desired contents in the content reproducing device.

When an application for directly controlling the content reproducing device is started up, it is necessary to switch a content input source in the content reproducing device to the content reproduction control device.

Furthermore, when an application for indirectly controlling the content reproducing device through the content output device is started up, it is necessary to switch the content input source (corresponding to an input terminal) in the content reproducing device to the content output device.

Heretofore, such switching of the input source has been carried out by a manual operation by the user each time application switching has been carried out.

The present invention has been contrived in view of these circumstances, and an object thereof is to provide a content reproduction control device, content reproducing system, content reproducing method, and content reproducing program capable of smoothly carrying out switching between a function of directly controlling a content reproducing device and a function of indirectly controlling the content reproducing device, and saving the labor of switching the content input source corresponding to the switching between these functions.

According to a first aspect of the invention, there is provided a content reproduction control device (300) connected to a content reproducing device (100) configured to reproduce contents and a content output device (200) configured to output the contents to the content reproducing device (100), and configured to control the content reproducing device (100) and the content output device (200). The device (300) comprises: operation sections (306b and 310) used to select one of reproducing first contents in the content reproduction control device (300) by the content reproducing device (100) and reproducing second contents in the content output device (200) by the content reproducing device (100); and a controller (312) configured to instruct the content reproducing device (100) to switch an input source in the content reproducing device (100) to the content output device (200), when reproducing the second contents is selected.

According to a second aspect of the invention, there is provided a content reproducing system comprising: a content reproducing device (100) configured to reproduce contents; a content output device (200) configured to output the contents to the content reproducing device (100); and the content reproduction control device according to the first aspect.

According to a third aspect of the invention, there is provided a content reproducing method in a content reproducing system including a content reproducing device (100) configured to reproduce contents, a content output device (200) configure to output the contents to the content reproducing device (100), and a content reproduction control device (300) configured to control the content reproducing device (100) and the content output device (200), the method comprising: selecting one of reproducing first contents in the content reproduction control device (300) in the content reproducing device (100) and reproducing second contents in the content output device (200) in the content reproducing device (100); and instructing the content reproducing device (100) to switch an input source in the content reproducing device (100) to the content output device (200), when reproducing the second contents is selected.

According to a fourth aspect of the invention, there is provided a content reproducing program in a content reproducing system including a content reproducing device (100) configured to reproduce contents, a content output device (200) configured to output the contents to the content reproducing device (100), and a content reproduction control device (300) configured to control the content reproducing device (100) and the content output device (200), the program comprising code for: selecting one of reproducing first contents in the content reproduction control device (300) in the content reproducing device (100) and reproducing second contents in the content output device (200) in the content reproducing device (100); and instructing, the content reproducing device (100) to switch an input source in the content reproducing device (100) to the content output device (200), when reproducing the second contents is selected.

### Brief Description of Drawings

FIG. 1 is a block diagram showing the configuration of a content reproducing system according to an embodiment of the present invention.
FIG. 2 is a view showing an application example of the content reproducing system.
FIG. 3 is a flowchart showing an operation of the content reproducing system according to the embodiment of the present invention.

### Description of Embodiments

Hereinafter, an embodiment of the present invention will be described with reference to the drawings.

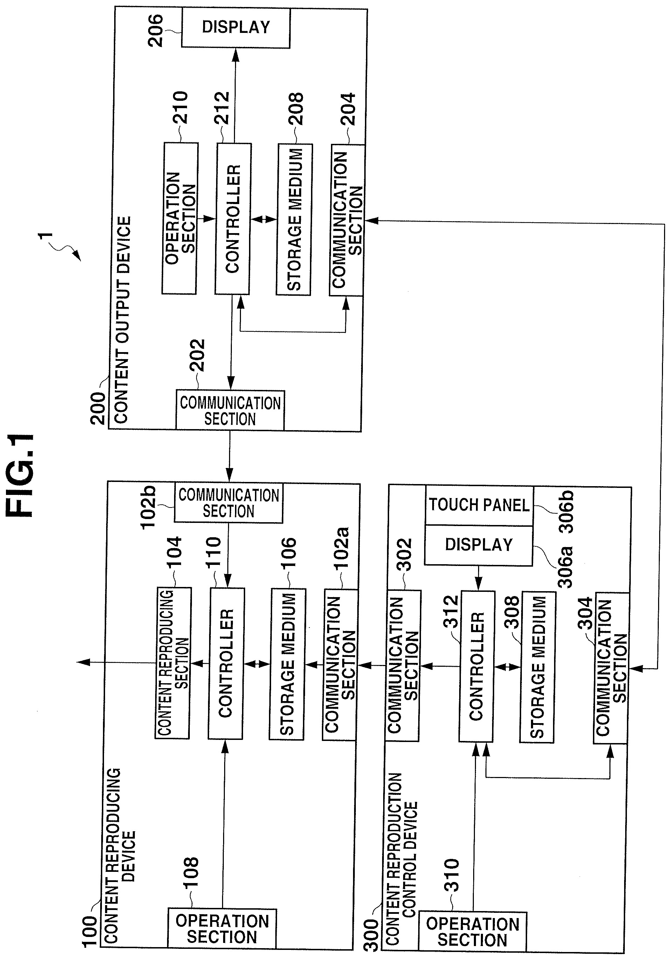

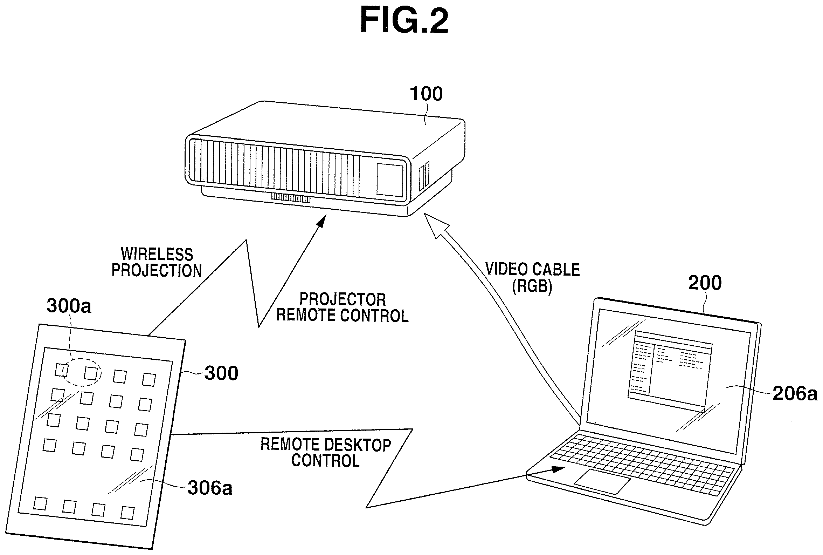

FIG. 1 is a block diagram showing the configuration of a content reproducing system according to the embodiment of the present invention. FIG. 2 is a view showing an application example of the content reproducing system. The content reproducing system 1 shown in FIG. 1 includes a content reproducing device 100, content output device 200, and content reproduction control device 300. The content reproducing device 100, the content output device 200, and the content reproduction control device 300 are connected to each other so that they can freely communicate with each other. In the content reproducing system 1 of an example shown in FIG. 2, the content reproducing device 100 is a projector. Further, the content output device 200 is a personal computer (PC). Furthermore, the content reproduction control device 300 is a smart device.

Hereinafter, each of the content reproducing device 100, the content output device 200, and the content reproduction control device 300 will be described below by assuming that the content reproducing device 100 is a projector, the content output device 200 is a PC, and the content reproduction control device 300 is a smart device.

The content reproducing device 100 includes communication sections 102a and 102b, content reproducing section 104, storage medium 106, operation section 108, and controller 110.

The communication section 102a is connected to the content reproduction control device 300, and functions as an interface configured to mediate data transfer between the content reproducing device 100 and content reproduction control device 300. The contents stored in the content reproduction control device 300 are input to the content reproducing device 100 through the communication section 102a. When the content reproducing device 100 is a projector, the communication section 102a is, for example, a wireless LAN interface. It should be noted that the communication section 102a may be a wired interface.

The communication section 102b is connected to the content output device 200, and functions as an interface configured to mediate data transfer between the content reproducing device 100 and content output device 200. The contents stored in the content output device 200 are input to the content reproducing device 100 through the communication section 102b. When the content reproducing device 100 is a projector, the communication section 102b is an interface (input terminals) including, for example, analog RGB terminals. It should be noted that the communication section 102b may be a wireless interface.

The content reproducing section 104 reproduces the contents input through the communication section 102a or 102b and stored in the storage medium 106, in accordance with the control of the controller 110. For example, when the content reproducing device 100 is a projector, the content reproducing section 104 carries out image projection on the basis of image data serving as the contents. At this time, the content reproducing section 104 carries out, as processing for projection, for example, processing of changing a resolution or the like to make the image data have a format appropriate for projection, processing of controlling a light source configured to emit projection light toward the projection plane, processing of modulating projection light according to image data in order to synchronize the modulation of the projection light with emission of the projection light from the light source.

The storage medium 106 includes a nonvolatile storage medium storing therein a control program necessary for the operation of the content reproducing device 100. Further, the storage medium 106 includes a volatile storage medium configured to temporarily store therein contents input through the communication section 102a or the communication section 102b.

The operation section 108 is constituted of various operation members (key operation section, and the like) provided for the user to directly issue an operation instruction to the content reproducing device 100. For example, an instruction to turn on the power to the content reproducing device 100 or an instruction to reproduce the contents is issued by using the operation section 108.

The controller 110 controls an operation of the content reproducing device 100 in accordance with the control program stored in the storage medium 106. The content reproducing device 100 may also be configured in such a manner that the content reproducing device 100 can reproduce contents independently by itself without being controlled by the content reproduction control device 300.

The content output device 200 includes a communication section 202, communication section 204, display 206, storage medium 208, operation section 210, and controller 212.

The communication section 202 is connected to the content reproducing device 100, and functions as an interface configured to mediate data transfer between the content output device 200 and content reproducing device 100. When the content output device 200 is a PC, the communication section 202 is an interface (output terminals) including, for example, analog RGB terminals. The contents stored in the content output device 200 are output to the content reproducing device 100 through the communication section 202.

The communication section 204 is connected to the content reproduction control device 300, and functions as an interface configured to mediate data communication between the content output device 200 and content reproduction control device 300. When the content output device 200 is a PC, the communication section 204 is, for example, a wireless LAN interface.

The display 206 displays various screens (information items). The display 206 is, for example, a liquid crystal display. When the content output device 200 is a PC, an application selection screen, desktop, and various screens or the like corresponding to the applications are displayed on the display 206.

The storage medium 208 includes a nonvolatile storage medium storing therein applications configured to carry out various specific processing items in the control program (operating system) necessary for the operation of the content output device 200 and content output device 200. In this nonvolatile storage medium, contents (image data when the content reproducing device 100 is a projector) to be reproduced in the content reproducing device 100 are also stored.

The operation section 210 is an operation member provided for the user to issue an operation instruction to the content output device 200. When the content output device 200 is a PC, the operation section 210 is constituted of various operation members such as a keyboard, mouse, and the like.

The controller 212 is, for example, a CPU, and controls an operation of the content output device 200 in accordance with the control program stored in the storage medium 208. Further, the controller 212 executes various processing items in accordance with the booted application.

The content reproduction control device 300 includes a communication section 302, communication section 304, display 306a, touch panel 306b, storage medium 308, operation section 310, and controller 312.

The communication section 302 is connected to the content reproducing device 100, and functions as an interface configured to mediate data transfer between the content reproduction control device 300 and content reproducing device 100. When the content reproduction control device 300 is a smart device, the communication section 302 is, for example, a wireless LAN interface. The contents stored in the content reproduction control device 300 are output to the content reproducing device 100 through the communication section 302.

The communication section 304 is connected to the content output device 200, and functions as an interface configured to mediate data communication between the content reproduction control device 300 and content output device 200. When the content reproduction control device 300 is a smart device, the communication section 304 is, for example, a wireless LAN interface.

The display 306a displays various screens (information items). The display 306a is, for example, a liquid crystal display. When the content reproduction control device 300 is a smart device, an application selection screen, desktop, and various screens or the like corresponding to the applications are displayed on the display 306a. Furthermore, in this embodiment, when an instruction to carry out remote desktop control is issued in the integrated application to be described later, a desktop which has been displayed on the PC functioning as the content output device 200 is displayed on the display 306a. The touch panel 306b is formed integral with the display 306a, and is an operation section configured to detect a touch of a finger or the like of the user on the display screen of the display 306a, and output information about the detected touch position to the controller 312.

The storage medium 308 includes a nonvolatile storage medium storing therein a control program (operating system) necessary for the operation of the content reproduction control device 300, and applications configured to carry out various specific processing items in the content reproduction control device 300. In this nonvolatile storage medium, contents (image data when the content reproducing device 100 is a projector) to be reproduced in the content reproducing device 100 are also stored. Furthermore, in the storage medium 308 of the content reproduction control device 300 in this embodiment, an integrated application formed by integrating an application for carrying out control of the content reproducing device 100 and application for carrying out control of the content output device 200 with each other is stored.

The operation section 310 is constituted of various operation members other than the touch panel 306b, the operation members being provided for the user to issue an operation instruction to the content reproduction control device 300. For example, an instruction to turn on the power to the content reproduction control device 300 is issued by using the operation section 310.

The controller 312 controls an operation of the content reproduction control device 300 in accordance with the control program stored in the storage medium 308. Further, the controller 312 executes various processing items in accordance with the booted application.

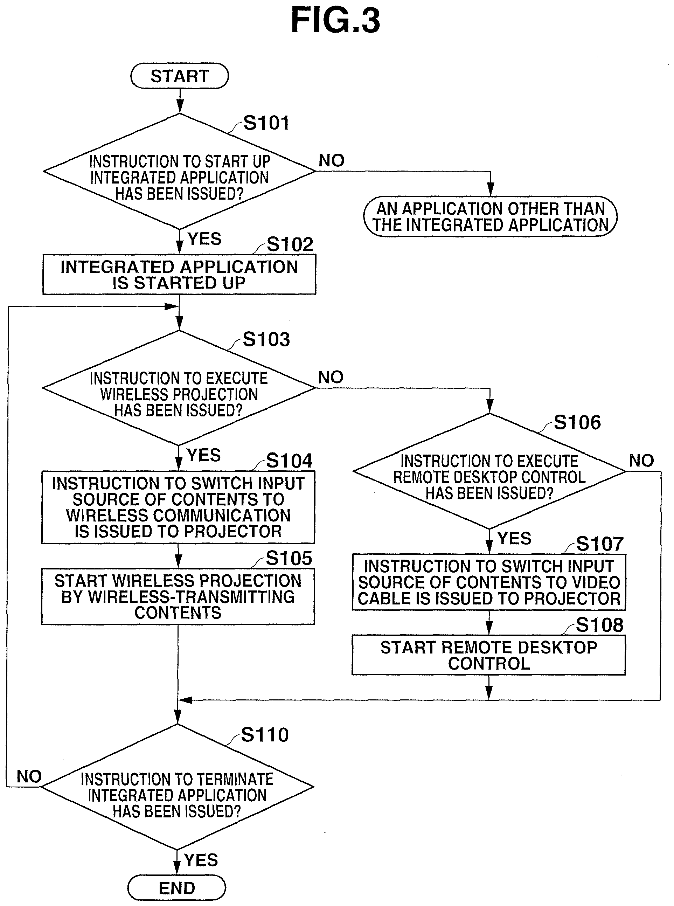

Next, an operation of the content reproducing system 1 according to this embodiment will be described below with reference to the flowchart of FIG. 3. In FIG. 3, first, the smart device functioning as the content reproduction control device 300 is started up by the user. When the smart device is started up, the controller 312 displays a list of applications as shown in FIG. 2. The user touches an icon 300a of the desired application in the list of applications displayed on the display 306a of the smart device. The information about the touch position detected by the touch panel 306b is output to the controller 312 as information about an application startup instruction. Upon receipt of the information about the touch position, the controller 312 starts up the application. In the operation of FIG. 3, the controller 312 determines whether or not an instruction to start up the integrated application has been issued by the user (step S101). In step S101, when determining that no instruction to start up the integrated application has been issued by the user, the controller 312 carries out an operation corresponding to the touch position. This operation is an operation or the like of starting up an application present at the touch position other than the integrated application. A description of the details is omitted.

When determining in step S101 that an instruction to start up the integrated application has been issued, the controller 312 starts up the integrated application (step S102). At this time, the controller 312 displays a startup screen of the integrated application on the display 306a. At least an icon or the like used to make the user select one of carrying out wireless projection and carrying out remote desktop control is displayed on the startup screen.

Subsequently, the controller 312 determines whether or not an instruction to execute wireless projection has been issued by the user, i.e., whether or not the user has touched the icon of wireless projection (step S103). When determining in step S103 that an instruction to execute wireless projection has been issued by the user, the controller 312 issues an instruction to switch the input source of contents (image data in this case) to the smart device (serving as the content reproduction control device 300) to the projector serving as the content reproducing device 100 by wireless communication using the communication section 302 (step S104). Upon receipt of this instruction, the controller 110 of the content reproducing device 100 waits for input of contents through the communication section 102a. Hereafter, the content reproducing device 100 operates in accordance with the control of the content reproduction control device 300.

After issuing the instruction to switch the input source, the controller 312 outputs the contents stored in the storage medium 308 to the content reproducing device 100 by wireless communication using the communication section 302, and makes the content reproducing device 100 start a content reproducing operation (step S105). Thereafter, the controller 312 shifts the processing to step S110. When the content reproducing device 100 is a projector, the content reproducing section 104 converts the contents (image data) to be input as digital data into data of a desired format, and carries out projection of an image on the projection plane on the basis of the converted image data.

When determining in step S103 that no instruction to execute wireless projection has been issued by the user, the controller 312 determines whether or not an instruction to execute remote desktop control has been issued by the user, i.e., whether or not the user has touched the icon of remote desktop (step S106). When determining in step S106 that no instruction to execute remote desktop control has been issued by the user, the controller 312 shifts the processing to step S110. When determining in step S106 that an instruction to execute remote desktop control has been issued by the user, the controller 312 issues an instruction to switch the input source of contents (image data in this case) to the PC (serving as the content output device 200) to the projector serving as the content reproducing device 100 by wireless communication using the communication section 302 (step S107). Upon receipt of this instruction, the controller 110 of the content reproducing device 100 waits for input of contents through the communication section 102b. Hereafter, the content reproducing device 100 operates in accordance with the control of the content reproduction control device 300 to be carried out through the content output device 200. It should be noted that the instruction in step S107 may be issued from the content output device 200.

After issuing the instruction to switch the input source, the controller 312 issues an instruction to execute remote desktop control to the PC serving as the content output device 200 (step S108). Thereafter, the controller 312 shifts the processing to step S110. The controller 212 of the PC serving as the content output device 200 outputs image data such as a desktop or the like which becomes necessary at the time of remote desktop control in the content reproduction control device 300 to the content reproduction control device through the communication section 204. The controller 312 displays the desktop for remote desktop control on the display 306a on the basis of the image data. It should be noted that it is desirable that the controller 312 should also display an icon or the like used for the operation of the integrated application on the desktop so that an instruction to terminate the integrated application or an instruction to switch the function can be issued even during display of the desktop. When an operation has been carried out on the desktop or the like displayed on the content reproduction control device 300, the contents of the operation are reflected in the content output device 200. When the operation at this time is an operation for instructing the content reproducing device 100 to reproduce the contents selected by the user, the content output device 200 outputs the contents stored in the storage medium 208 to the content reproducing device 100 by wired communication using the communication section 202, and makes the content reproducing device 100 start a content reproducing operation.

After step S105, step S106 (No), and step S108 have been carried out, the controller 312 determines whether or not an instruction to terminate the integrated application has been issued by the user (step S110). When determining in step S110 that no instruction to terminate the integrated application has been issued by the user, the controller 312 returns the processing to step S103. When determining in step S110 that an instruction to terminate the integrated application has been issued by the user, the controller 312 terminates the processing of FIG. 3.

As has been described above, according to this embodiment, it is possible for the user to switch between the function of direct control over the content reproducing device 100 by the content reproduction control device 300 and function of indirect control over the content reproducing device 100 through the content output device 200 on the integrated application. That is, the user need not carry out application switching between an application for directly controlling the content reproducing device 100 by the content reproduction control device 300 and application for indirectly controlling the content reproducing device 100 through the content output device 200. For this reason, according to this embodiment, the labor of the user can be saved. Further, in this embodiment, in accordance with switching carried out by the user, switching of the input source in the content reproducing device 100 is automatically carried out. Thereby, the user need not switch the input source by operating the content reproducing device 100. Therefore, according to this embodiment, it is possible to further save the labor of the user.

Here, in this embodiment, the description is given by assuming that the content reproducing device 100 is a projector, the content output device 200 is a PC, and the content reproduction control device 300 is a smart device. However, it is sufficient if the content reproducing device 100 has a content reproducing function, and the contents are not necessarily image data. For example, the content reproducing device 100 may be an audio player. Further, it is sufficient if the content output device 200 has a content output function, and the content output device 200 may not necessarily include functions other than the content output function unlike the PC. Furthermore, the content reproduction control device 300 may not be a smart device.

## Claims

1. A content reproduction control device (300) connectable to a content reproducing device (100) configured to reproduce contents and a content output device (200) configured to output the contents to the content reproducing device (100), and configured to control the content reproducing device (100) and the content output device (200), the device (300) comprising:
operation sections (306b and 310) used to select one of reproducing first contents in the content reproduction control device (300) by the content reproducing device (100) and reproducing second contents in the content output device (200) by the content reproducing device (100); and
a controller (312) configured to instruct the content reproducing device (100) to switch an input source in the content reproducing device (100) to the content output device (200), when reproducing the second contents is selected.

2. The content reproduction control device (300) according to claim 1, wherein the controller (312) instructs the content reproducing device (100) to switch the input source in the content reproducing device (100) to the content reproduction control device (300), when reproducing the first contents is selected.

3. The content reproduction control device (300) according to claim 1 or 2, wherein
the content output device (200) is a personal computer, and outputs the second contents by remote desktop control to be executed by the controller (312).

4. The content reproduction control device (300) according to any one of claims 1 to 3, wherein the content reproducing device (100) is a projector, and projects the first contents or the second contents input thereto on a projection plane.

5. The content reproduction control device (300) according to any one of claims 1 to 4, wherein the content reproducing device (100) is connectable to the content reproduction control device (300) by wireless connection.

6. A content reproducing system comprising:
a content reproducing device (100) configured to reproduce contents;
a content output device (200) configured to output the contents to the content reproducing device (100); and
the content reproduction control device according to any one of claims 1 to 5.

7. A content reproducing method in a content reproducing system including a content reproducing device (100) configured to reproduce contents, a content output device (200) configured to output the contents to the content reproducing device (100), and a content reproduction control device (300) configured to control the content reproducing device (100) and the content output device (200), the method comprising the following steps performed by the content reproduction control device (300):
selecting one of reproducing first contents in the content reproduction control device (300) in the content reproducing device (100) and reproducing second contents in the content output device (200) in the content reproducing device (100); and
instructing the content reproducing device (100) to switch an input source in the content reproducing device (100) to the content output device (200), when reproducing the second contents is selected.

8. A content reproducing program in a content reproducing system including a content reproducing device (100) configured to reproduce contents, a content output device (200) configured to output the contents to the content reproducing device (100), and a content reproduction control device (300) configured to control the content reproducing device (100) and the content output device (200), the content reproduction control device (300) comprising the program code for:
selecting one of reproducing first contents in the content reproduction control device (300) in the content reproducing device (100) and reproducing second contents in the content output device (200) in the content reproducing device (100); and
instructing, the content reproducing device (100) to switch an input source in the content reproducing device (100) to the content output device (200), when reproducing the second contents is selected.

## Patentansprüche

1. Inhaltswiedergabesteuervorrichtung (300), die an eine Inhaltswiedergabevorrichtung (100), die dazu eingerichtet ist, Inhalte wiederzugeben, und eine Inhaltsausgabevorrichtung (200) anschließbar ist, die dazu eingerichtet ist, die Inhalte an die Inhaltswiedergabevorrichtung (100) auszugeben, und die dazu eingerichtet ist, die Inhaltswiedergabevorrichtung (100) und die Inhaltsausgabevorrichtung (200) zu steuern, wobei die Vorrichtung (300) umfasst:
Betätigungsabschnitte (306b und 310), die dazu verwendet werden zu wählen, einen der ersten Inhalte in der Inhaltswiedergabesteuervorrichtung (300) durch die Inhaltswiedergabevorrichtung (100) wiederzugeben und zweite Inhalte in der Inhaltsausgabevorrichtung (200) durch die Inhaltswiedergabevorrichtung (100) wiederzugeben; und
eine Steuereinheit (312), die dazu eingerichtet ist, die Inhaltswiedergabevorrichtung (100) anzuweisen, eine Eingabequelle in der Inhaltswiedergabevorrichtung (100) zu der Inhaltsausgabevorrichtung (200) umzuschalten, wenn die Wiedergabe des zweiten Inhalts ausgewählt wird.

2. Inhaltswiedergabesteuervorrichtung (300) nach Anspruch 1, bei der die Steuereinheit (312) die Inhaltswiedergabevorrichtung (100) anweist, die Eingangsquelle in der Inhaltswiedergabevorrichtung (100) auf die Inhaltswiedergabesteuervorrichtung (300) umzuschalten, wenn die Wiedergabe der ersten Inhalte ausgewählt wird.

3. Inhaltswiedergabesteuervorrichtung (300) nach Anspruch 1 oder 2, bei der die Inhaltsausgabevorrichtung (200) ein PC ist und die zweiten Inhalte durch eine Desktop-Fernsteuerung ausgibt, die von der Steuereinheit (312) ausgeführt werden soll.

4. Inhaltswiedergabesteuervorrichtung (300) nach einem der Ansprüche 1 bis 3, bei der die Inhaltswiedergabevorrichtung (100) ein Projektor ist und die ersten Inhalte oder die darin eingegebenen zweiten Inhalte auf eine Projektionsebene projiziert.

5. Inhaltswiedergabesteuervorrichtung (300) nach einem der Ansprüche 1 bis 4, bei der die Inhaltswiedergabevorrichtung (100) über eine drahtlose Verbindung mit der Inhaltswiedergabesteuervorrichtung (300) verbindbar ist.

6. Inhaltswiedergabesystem, umfassend:
eine Inhaltswiedergabevorrichtung (100), die zum Wiedergeben von Inhalten eingerichtet ist;
eine Inhaltsausgabevorrichtung (200), die zum Ausgeben der Inhalte an die Inhaltswiedergabevorrichtung (100) eingerichtet ist; und
die Inhaltswiedergabesteuervorrichtung nach einem der Ansprüche 1 bis 5.

7. Inhaltswiedergabeverfahren in einem Inhaltswiedergabesystem, umfassend eine Inhaltswiedergabevorrichtung (100), die zum Wiedergeben von Inhalten eingerichtet ist, eine Inhaltsausgabevorrichtung (200), die zum Ausgeben der Inhalte an die Inhaltswiedergabevorrichtung (100) eingerichtet ist, und eine Inhaltswiedergabesteuervorrichtung (300), die zur Steuerung der Inhaltswiedergabevorrichtung (100) und der Inhaltsausgabevorrichtung (200) eingerichtet ist, wobei das Verfahren die folgenden Schritte umfasst, die von der Inhaltswiedergabesteuervorrichtung (300) ausgeführt werden:
Auswählen der Wiedergabe erster Inhalte in der Inhaltswiedergabesteuervorrichtung (300) in der Inhaltswiedergabevorrichtung (100) oder der Wiedergabe zweiter Inhalte in der Inhaltsausgabevorrichtung (200) in der Inhaltswiedergabevorrichtung (100); und
Anweisen der Inhaltswiedergabevorrichtung (100), eine Eingabequelle in der Inhaltswiedergabevorrichtung (100) zu der Inhaltsausgabevorrichtung (200) umzuschalten, wenn die Wiedergabe des zweiten Inhalts ausgewählt wird.

8. Inhaltswiedergabeprogramm in einem Inhaltswiedergabesystem, umfassend eine Inhaltswiedergabevorrichtung (100), die zum Wiedergeben von Inhalten eingerichtet ist, eine Inhaltsausgabevorrichtung (200), die zum Ausgeben der Inhalte an die Inhaltswiedergabevorrichtung (100) eingerichtet ist, und eine Inhaltswiedergabesteuervorrichtung (300), die zum Steuern der Inhaltswiedergabevorrichtung (100) und der Inhaltsausgabevorrichtung (200) eingerichtet ist, wobei die Inhaltswiedergabesteuervorrichtung (300) den Programmcode umfasst für das:
Auswählen der Wiedergabe erster Inhalte in der Inhaltswiedergabesteuervorrichtung (300) in der Inhaltswiedergabevorrichtung (100) oder der Wiedergabe zweiter Inhalte in der Inhaltsausgabevorrichtung (200) in der Inhaltswiedergabevorrichtung (100); und
Anweisen der Inhaltswiedergabevorrichtung (100), eine Eingabequelle in der Inhaltswiedergabevorrichtung (100) zu der Inhaltsausgabevorrichtung (200) umzuschalten, wenn die Wiedergabe des zweiten Inhalts ausgewählt wird.

## Revendications

1. Dispositif de commande de reproduction de contenu (300) pouvant être connecté à un dispositif de reproduction de contenu (100) configuré de manière à reproduire des contenus, et à un dispositif de fourniture en sortie de contenu (200) configuré de manière à fournir en sortie les contenus au dispositif de reproduction de contenu (100), et configuré de manière à commander le dispositif de reproduction de contenu (100) et le dispositif de fourniture en sortie de contenu (200), le dispositif (300) comprenant :
des sections d'opération (306b et 310) utilisées pour sélectionner l'une parmi la reproduction de premiers contenus dans le dispositif de commande de reproduction de contenu (300), par le dispositif de reproduction de contenu (100), et la reproduction de seconds contenus dans le dispositif de fourniture en sortie de contenu (200), par le dispositif de reproduction de contenu (100) ; et
un contrôleur (312) configuré de manière à donner instruction au dispositif de reproduction de contenu (100) de commuter une source d'entrée dans le dispositif de reproduction de contenu (100) sur le dispositif de fourniture en sortie de contenu (200), lorsque la reproduction des seconds contenus est sélectionnée.

2. Dispositif de commande de reproduction de contenu (300) selon la revendication 1, dans lequel :
le contrôleur (312) donne instruction au dispositif de reproduction de contenu (100) de commuter la source d'entrée dans le dispositif de reproduction de contenu (100) sur le dispositif de commande de reproduction de contenu (300), lorsque la reproduction des premiers contenus est sélectionnée.

3. Dispositif de commande de reproduction de contenu (300) selon la revendication 1 ou 2, dans lequel :
le dispositif de fourniture en sortie de contenu (200) est un ordinateur personnel, et il fournit en sortie les seconds contenus par le biais d'une commande de bureau à distance devant être exécutée par le contrôleur (312).

4. Dispositif de commande de reproduction de contenu (300) selon l'une quelconque des revendications 1 à 3, dans lequel le dispositif de reproduction de contenu (100) est un projecteur, et il projette les premiers contenus ou les seconds contenus entrés dans celui-ci sur un plan de projection.

5. Dispositif de commande de reproduction de contenu (300) selon l'une quelconque des revendications 1 à 4, dans lequel :
le dispositif de reproduction de contenu (100) peut être connecté au dispositif de commande de reproduction de contenu (300) par le biais d'une connexion sans fil.

6. Système de reproduction de contenu comprenant :
un dispositif de reproduction de contenu (100) configuré de manière à reproduire des contenus ;
un dispositif de fourniture en sortie de contenu (200) configuré de manière à fournir en sortie les contenus au dispositif de reproduction de contenu (100) ; et
le dispositif de commande de reproduction de contenu selon l'une quelconque des revendications 1 à 5.

7. Procédé de reproduction de contenu dans un système de reproduction de contenu incluant un dispositif de reproduction de contenu (100) configuré de manière à reproduire des contenus, un dispositif de fourniture en sortie de contenu (200) configuré de manière à fournir en sortie les contenus au dispositif de reproduction de contenu (100), et un dispositif de commande de reproduction de contenu (300) configuré de manière à commander le dispositif de reproduction de contenu (100) et le dispositif de fourniture en sortie de contenu (200), le procédé comprenant les étapes ci-dessous, mises en oeuvre par le dispositif de commande de reproduction de contenu (300), consistant à :
sélectionner l'une parmi la reproduction de premiers contenus dans le dispositif de commande de reproduction de contenu (300) dans le dispositif de reproduction de contenu (100), et la reproduction de seconds contenus dans le dispositif de fourniture en sortie de contenu (200) dans le dispositif de reproduction de contenu (100) ; et donner instruction au dispositif de reproduction de contenu (100) de commuter une source d'entrée dans le dispositif de reproduction de contenu (100) sur le dispositif de fourniture en sortie de contenu (200), lorsque la reproduction des seconds contenus est sélectionnée.

8. Programme de reproduction de contenu dans un système de reproduction de contenu incluant un dispositif de reproduction de contenu (100) configuré de manière à reproduire des contenus, un dispositif de fourniture en sortie de contenu (200) configuré de manière à fournir en sortie les contenus au dispositif de reproduction de contenu (100), et un dispositif de commande de reproduction de contenu (300) configuré de manière à commander le dispositif de reproduction de contenu (100) et le dispositif de fourniture en sortie de contenu (200), le dispositif de commande de reproduction de contenu (300) comprenant un code de programme pour :
sélectionner l'une parmi la reproduction de premiers contenus dans le dispositif de commande de reproduction de contenu (300) dans le dispositif de reproduction de contenu (100), et la reproduction de seconds contenus dans le dispositif de fourniture en sortie de contenu (200) dans le dispositif de reproduction de contenu (100) ; et donner instruction au dispositif de reproduction de contenu (100) de commuter une source d'entrée dans le dispositif de reproduction de contenu (100) sur le dispositif de fourniture en sortie de contenu (200), lorsque la reproduction des seconds contenus est sélectionnée.
